# EUROPEAN PATENT APPLICATION

(11) **EP 1 343 167 A2**
(43) Date of publication of application: **10.09.2003**
(21) Application number: 03100600.0
(22) Date of filing: 10.03.2003
(51) Int. Cl.: G11B 27/10, G11B 27/32, G11B 27/34

(54) **Use of Metadata Presort File to Sort Compressed Audio Files**

(30) Priority: 08.03.2002 US 362796 P; 17.09.2002 US 259157
(71) Applicant: Texas Instruments Incorporated, Dallas, Texas 75251 (US)
(72) Inventor: Millikan, Thomas N, 78741, Austin (US); Kothandaraman, Sreenivas, 77005-1862, Houston (US)
(74) Representative: Holt, Michael

(57) **Abstract**

A media system presorts media files thereby alleviating a media player from having to actively sort the files in real time. The system creates and uses presort information (86) with the media files. The presort information (88) contains a vector sort table (88) and one or more presort segments (90) listing the media files (92) in a previously presorted order according to different sorting criteria (94). The presort information (86) permits a user the ability to play the media files according to the presort segments (90) without the player itself having to include 1o gic to sort the files. Broadly, the user selects one of the presorted segments (90) of media files (92) and the player plays the media files (92) in the specified order. In one embodiment, the media files contain audio data and the player comprises an audio CD player such as an MP3-compliant device.

## Description

### BACKGROUND OF THE INVENTION

### Field of the Invention

The present invention generally relates to a system for sorting digital audio files. More particularly, the invention relates to creating a metadata presort file which can be used by an audio player to permit a user to sort audio files according to different sort criteria and display detailed song information with minimal sorting logic and memory in the player itself.

### Background Information

Audio electronics have long included devices that permit a user to listen to music or other types of audio. An example of such devices includes a cassette tape player. More recently, compact disk ("CD") audio players have become extremely popular. A CD disk is a relatively flat, round disk that is approximately 4.5 inches in diameter. The information stored on a CD is stored in a digital format, not analog as for the larger vinyl records used in conjunction with record players.

CDs have several advantages over records. For example, many audiophiles believe the audio quality from a CD is superior to that of records. Further. CDs are smaller than records. Further still, unlike records which are relatively fragile and must be treated with much care to keep them clean, CDs are less fragile and susceptible to dirt and other contaminants. Also, CDs can be played using battery operated, portable CD players, whereas records cannot be played in this fashion.

Conventional audio CDs include audio tracks (e.g., songs) in which the audio has been digitized and stored in digital form. A typical audio CD includes 15-20 songs. A user can scroll forward or backward through the various track numbers shown on a display to select a desired track number to play. Because of the nature of conventional audio CDs, a conventional CD player does not permit the user to see any information, other than the track number, on the player's display.

More recently, compressed audio technology has increased in popularity. An audio compression standard that has become widely used was promulgated by the *Motion Picture Experts Group* ("MPEG"). This group has introduced a variety of standards for compressing video and associated audio. Of these various standards the MPEG-1/2 Layer-3 standard ("MP3") has become widely used for compressing audio data for use in consumer products. Application of the MP3 standard can result in a compression ratio of 10:1 or greater. That is, with a 10:1 compression ratio ten times more information can be stored on a CD having the same capacity as with the conventional audio CDs for which the data is not compressed. With MP3 technology, a user can copy compressed audio files to a CD (a process typically referred to as "burning" the CD) and then play the audio files via an MP3-compliant player. The MP3 player retrieves a compressed file from the disk, decompresses the file, and plays the file through speakers or headphones connected to the player. Some MP3 players decompress and play audio stored on a CD as noted above, while other MP3 players decompress and play audio stored in solid state memory in the player. In the latter type of player, the user downloads MP3-compressed audio files directly into the MP3 player's memory.

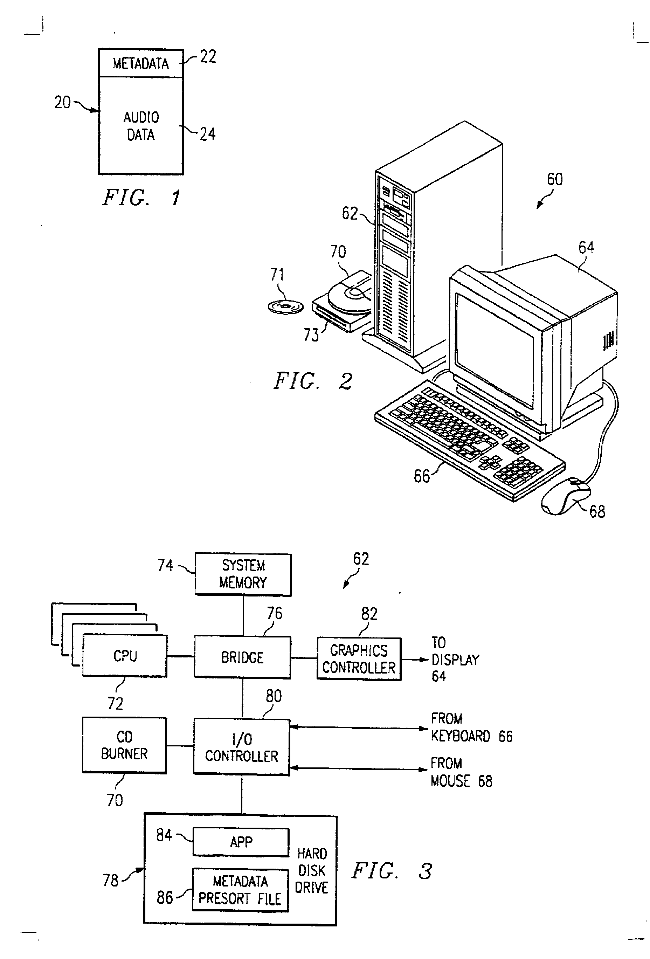

As is typically the case, as shown in Figure 1 each MP3 audio file (represented by file 20) generally contains a metadata field 22 and a compressed audio data payload 24. Other information may be included as well and the metadata field 22 may be located at the beginning of the file as shown or at the end of the file. The audio data payload 24 contains a compressed version of he audio information (e.g., song) to be played. The metadata field 22 contains information regarding the audio file. Exemplary types of information contained in the metadata field include: song name, artist name, album name, file length, genre (e.g., rock and roll, classical, jazz, etc.), track number and other, or different, types of information that may be useful to the user.

Because many more audio files can be placed on an MP3 disk than a conventional audio CD, and because the user can select which files to place on the disk, the user can create a disk having hundreds of songs by different artists and in different genres of music. Because of the potentially voluminous amount of audio data that can be placed on an MP3 disk, it is highly preferable to provide a mechanism by which the user can efficiently select which audio files to play and the order in which they should be played. Such a mechanism is fairly straightforward to implement on a standard computer. The MP3 files can be stored on the computer's hard disk drive and a software interface can permit a user to use the computer's keyboard, mouse and display to sort the MP3 files in a user-desired manner and play a selected subset of the files in a desired order. For example, the user could decide to play all of the jazz files in alphabetical order according to artist name. Alternatively, the user could decide to play all of the songs by a particular artist in title order.

As noted, sorting the MP3 files on a standard personal computer is fairly straightforward. The process generally requires access to the metadata associated with each MP3 and uses one or more pieces of information in the metadata (e.g., artist name, genre) of each file to perform the search. Thus, when a user wants to sort the files in accordance with a certain criteria, the computer scans the metadata associated with each file and sorts the files in the order specified by the user. This process is inherently time consuming and requires a great deal of random access memory ("RAM").

In a standard computer time and amount of memory are not generally limiting factors. Standard personal computers typically include state of the art microprocessors operating at gigahertz or faster clock rates and large amounts of RAM (e.g., 128 megabytes). In a portable MP3 player, however, processing time and memory can indeed be limiting. The performance of a portable player is generally constrained by cost which generally means that the portable device has a slower microprocessor and much less memory than a desktop computer. Further, for MP3 players that can read MP3 files from a CD, it takes a significant amount of time for the player to move the laser beam to the correct spot on the disk to access a particular file. This time can be on the order of a few seconds. Thus, it would take an annoyingly long period of time for a portable player to access and sort through the metadata of hundreds of audio files stored on the CD, and a large amount of memory to store all of the details. For these reasons and others, portable MP3 players generally do not provide the user the ability to sort through the files contained in the player. Instead, the user interface is limited to simply scrolling sequentially through the titles one at a time in the order they are burned.

Accordingly, a mechanism is needed by which an operator of a CD player (e.g., an MP3 player) can efficiently sort through the files contained in memory in the player or on a CD. Such a mechanism would be particularly useful for portable CD players, but also useful for non-portable equipment such as personal computers, non-portable CD players, etc.

### BRIEF SUMMARY OF THE PREFERRED EMBODIMENTS OF THE INVENTION

The preferred embodiments of the present invention solve the deficiencies noted above by storing presort information with the audio files. The presort information contains one or more lists of the audio files presorted according to different sorting criteria. The presort information permits a user the ability to play the compressed-audio files according to one or more of the presorted lists and display detailed song information without the player itself having to include logic to sort the files. Broadly, the user selects one of the presorted list of audio files and the player plays the files in the specified order.

In accordance with one preferred embodiment of the invention, an electronic system (e.g., a personal computer) creates a metadata presort file before or while burning a CD. The metadata presort file includes one or more pieces of information from the audio files' metadata (discussed above). The presort file includes one or more presort segments. Each presort segment includes metadata information that specifies an audio file according to a particular sorting criteria. For example, one presort segment might include metadata pertaining to all of the jazz files in order by artist, while another presort segments includes metadata pertaining to all of the audio files in alphabetical order by artist, then song name. Each presort segment includes those items of metadata relevant to the sorting criteria used to create that particular segment which the player may read and display to the user. The metadata presort file also includes a vector sort table which includes a list of the sorting criteria used to create the various presort segments and the location of that presort segment.

The electronic system is used to create the metadata presort file which is stored on the CD with the audio data. Once inserted into a player, the user can select one of the sorting criteria in the presort file's vector sorting table. The player will then play the songs in the order specified by the selected sorting criteria. Thus, the audio files on the CD can be played in a desired order, but the player need not include much logic to actively sort the files itself.

The principles discussed herein apply broadly to any type of media files including audio files, video files, graphics files, files containing a combination of audio and video, text files, etc. The electronic system that creates the presort information preferably is a desktop or laptop personal computer, but can be any type of electronic system capable of performing the functions described herein such as a consumer device dedicated for just this purpose. Further, the player preferably is a portable or non-portable CD or MP3 player, but in general is any type of device capable of performing the functions described herein. The player may access the media files and presort information from a disk, such as a CD, or other type of removable medium or any type of solid state storage (e.g., random access memory).

These and other aspects of the present invention will become apparent upon analyzing the drawings, detailed description and claims, which follow.

### BRIEF DESCRIPTION OF THE DRAWINGS

For a detailed description of the preferred embodiments of the invention, reference will now be made to the accompanying drawings in which:
Figure 1 is a representation of a single audio file containing metadata and a compressed audio payload;
Figure 2 shows an electronic system usable to create a metadata presort file;
Figure 3 shows a functional block diagram of the electronic system of Figure 2;
Figure 4 shows a metadata presort file used by the player to sort audio files;
Figure 5 shows an exemplary arrangement of directories and files of audio data;
Figure 6 shows a portable CD player through which a user can sort audio files using the metadata presort file contained on the CD; and
Figure 7 is a block diagram ofthe portable CD player of Figure 6.

### NOTATION AND NOMENCLATURE

Certain terms are used throughout the following description and claims to refer to particular system components. As one skilled in the art will appreciate, processor and computer companies may refer to a component and sub-components by different names. This document does not intend to distinguish between components that differ in name but not function. In the following discussion and in the claims, the terms "including" and "comprising" are used in an open-ended fashion, and thus should be interpreted to mean "including, but not limited to...". Also, the term "couple" or "couples" is intended to mean either a direct or indirect electrical connection. Thus, if a first device couples to a second device, that connection may be through a direct electrical connection, or through an indirect electrical connection via other devices and connections. The term "proxy" is used in one preferred embodiment below. This term is simply meant to refer to any type of value that can be used in place of another value. The term "audio file" is intended to include various types of compressed audio files such as files compressed in accordance with the MP3 standard. To the extent that any term is not specially defined in this specification, the intent is that the term is to be given its plain and ordinary meaning.

### DETAILED DESCRIPTION OF THE PREFERRED EMBODIMENTS

In accordance with a preferred embodiment of the invention, an audio system presorts a plurality of audio files according to one or more sorting criteria. Presorting information associated with the results of each of the sorts is written to a presort file which is stored with the audio files. For example, if the audio files are burned on to a CD, the presort is also burned on to the CD. The presorting information contained in the presort file indicates how the audio files are to be sorted according to various criteria. Using an audio player, a user can readily play some or all of the audio files contained on the disk according to any of the presorted criteria contained in the presort file. The presort criteria may include genre alphabetical order (e.g., classical, country, jazz, rock & roll), artist alphabetical order, genre order with the songs in each genre sorted in alphabetical artist order and, in general, any desired ordering criteria. The user simply picks the sorting criteria and requests the player to play the songs in that order. Any one of a variety of embodiments is possible to implement a system embodying this presorting feature. One suitable, but not limiting, embodiment is described below.

In accordance with one preferred embodiment, the presort file is created using a personal computer. The computer burns a CD with a plurality of audio files and also the metadata presort file. Once burned, the CD can then be played using a suitable player. Figure 2 shows a computer system 60 which can be used to create the presort file and burn a CD. As shown, the computer system 60 comprises a processor unit 62 coupled to a display 64, a keyboard 66, a mouse 68 and a CD burner 70. As is well known, an operator controls the computer using the keyboard 66 and/or mouse 68 and display 64. The CD burner 70 accepts a CD 71 via a slot or tray 73. The burner 70 accepts data from the processor unit 62 to format and write to the CD. CD burners are well known in the art.

As shown in the block diagram of Figure 3, the processor unit 62 includes a one or more central processing units ("CPUs") 72, volatile system memory 74, a bridge device 76, a hard disk drive 78, an input/output controller 80, and a graphics controller 82. Additional components may be included as well as would be known to one of ordinary skill in the art. The bridge device 76 in the processor unit 62 operatively couples together the CPUs 72, system memory 74 and the graphics controller 82. The graphics controller 82 receives graphics data from, for example, the CPUs 72 which it converts to suitable signals for driving display 64. Through the bridge 76, the CPUs 72 can read data from and write data to system memory 74 and the graphics controller 82. Similarly, the graphics controller 82 can read graphics related data from system memory 74 and, if desired, display such data on display 64. The hard disk drive 78 couples to the system via the I/O controller 80 which can be any controller suitable for operating a hard drive. The I/O controller 80 may also include connections for the keyboard 66 and mouse 68, or a separate control unit may be used to interface to the keyboard and mouse. In general, software stored on the hard disk drive 78 can be executed by one or more of the CPUs 72. As is commonly the case, a software program to be executed is copied from the hard drive 78 to system memory 74 and executed by a CPU 72 from system memory.

Referring still to Figure 3, at least one of the applications that preferably is executed by computer system 60 is an application 84 that functions to create the presort file noted above. The application that creates the presort file and the resulting presort file itself both can be stored on hard drive 78 as, respectively, application 84 and file 86. The application 84 that creates the presort file may be part of an application (not shown) that burns the CD or a separate application.

As discussed previously, an MP3 audio file includes metadata which contains information regarding the audio data. Exemplary types of information contained in the metadata field of an MP3 file include: song name, artist, album, file length, genre (e.g., rock and roll, classical, jazz, etc.), track number and other, or different, types of information that may be useful to the user. Application 84 uses the metadata from each audio file to create presort information which the application stores in presort file 84. For that reason, the presort file is referred to as the "metadata presort file."

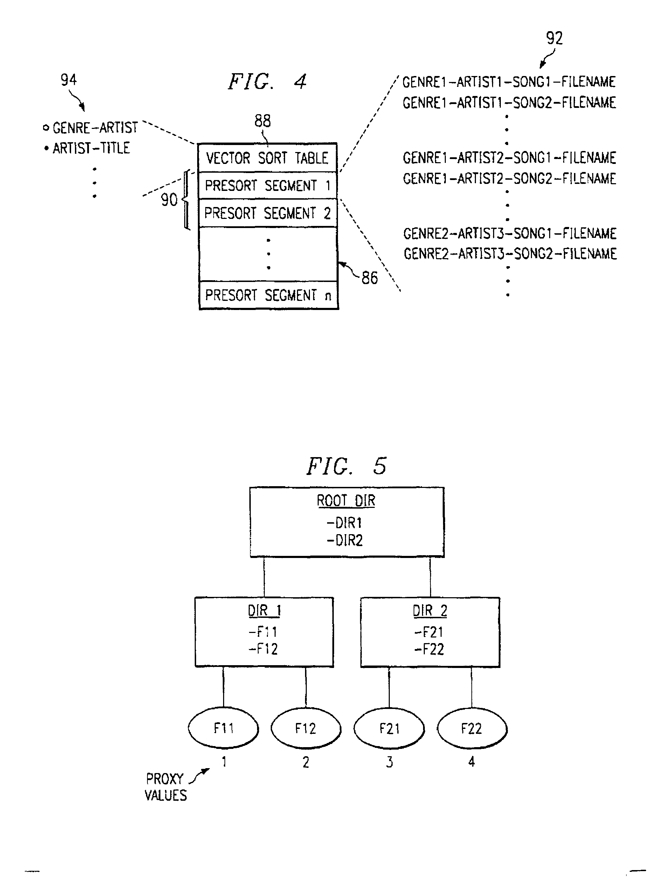

One suitable format for the metadata presort file 86 is shown in Figure 4. As shown, the preferred presort file 86 comprises a vector sort table 88 and one or more presort segments 90. The presort segments 90 comprise information the CPU 72 extracts taken from the audio files' metadata. Each presort segment 90 corresponds to a sorting criteria which may vary between presort segments. Each presort segment 90 contains information that is indicative of a particular order for the audio files. Exemplary sorting criteria include, without limitation:
- Genre-artist: the files are arranged first according to genre (country, jazz, rock and roll, etc.) and then, within each genre, the files are ordered according to artist name.
- Artist-song name: the files are arranged first according to an alphabetical listing of artists and then, for each artist, the files are arranged alphabetically by song name Many other criteria for sorting audio files are possible and are included within the scope of this disclosure. Figure 4 shows an exemplary presort segment 90 in which the audio files are sorted by genre, and then by artist within each genre. Each entry 92 in segments 90 corresponds to an audio file and includes the genre (e.g., GENRE1, GENRE2, etc.), the artist name (e.g., ARTIST1, ARTIST2, etc.) and audio track name (SONG1, SONG2, etc.). Each entry 92 may also include the name of the file containing the audio data and metadata, some or all of which the player may use for display information.

The vector sort table 88 includes a listing of the various sorting criteria 94 that are used to create the presort segments 90. Exemplary sorting criteria are shown in Figure 4 as "genre-artist" and "artist-title." As explained above, each presort segment 90 includes a plurality of entries, each entry corresponding to an audio file and the entries are arranged in order according to the particular sorting criteria for that segment. As such, each sorting criterion 94 contained in vector table 88 corresponds to the information in one of the presort segments 90. Each sorting criteria also preferably includes information indicating the location of the corresponding present segment.

The CPU 72 preferably creates the metadata presort file 86 before or while burning a CD and stores the presort file 86 on the CD with a predetermined name along with the compressed audio files. As will be explained in detail below, the audio files on the CD then can be played in the order associated with any of the presorted segments 90 without a player having to sort the audio files while the user waits. That is, the audio files have already been sorted and the player uses the presorted file information to permit a user to efficiently sort through and play the audio files in a desired order. In addition to the presort file 86 and the various audio files, "file system" information is also assembled and stored on the disk during the burn process at a predetermined location. The file system information is commonly found on MP3 disks. The file system information contains standardized information regarding each audio file on the CD. Such information includes a name (e.g., name of a song, name of file), total size of the file (i.e., number of bytes), and the starting address of the file on the CD. Other information may included as part of the file system information as well. The file system information preferably is stored on the CD at a predetermined standard location and extracted from the disk after the disk is inserted into a player. Industry standards typically dictate the form and substance of the various file systems on a disc. For example, audio CDs only contain a disc level file system known as Redbook, while CD-ROM discs contain a disc level file system such as Yellowbook or Orangebook, and a high level file system such as ISO9660 or UDF.

Instead of storing the names of the audio files as part of each entry 92 in the presort segments 90, a "proxy" value can be used in its place. One embodiment of a proxy value is a one or two byte number. Each unique proxy value corresponds to an audio file. As a one byte number, the range of proxy values is large enough to correspond to 256 audio files. If the ability to accommodate more than 256 files is desired, then the proxy value can be expanded by an additional byte or bytes as is needed. Proxy values, which generally require fewer bits of storage than file names, may be preferred to reduce the demand for disk and player memory capacity, and since the display information is stored in the pre-sort file the filename can be eliminated entirely if desired.

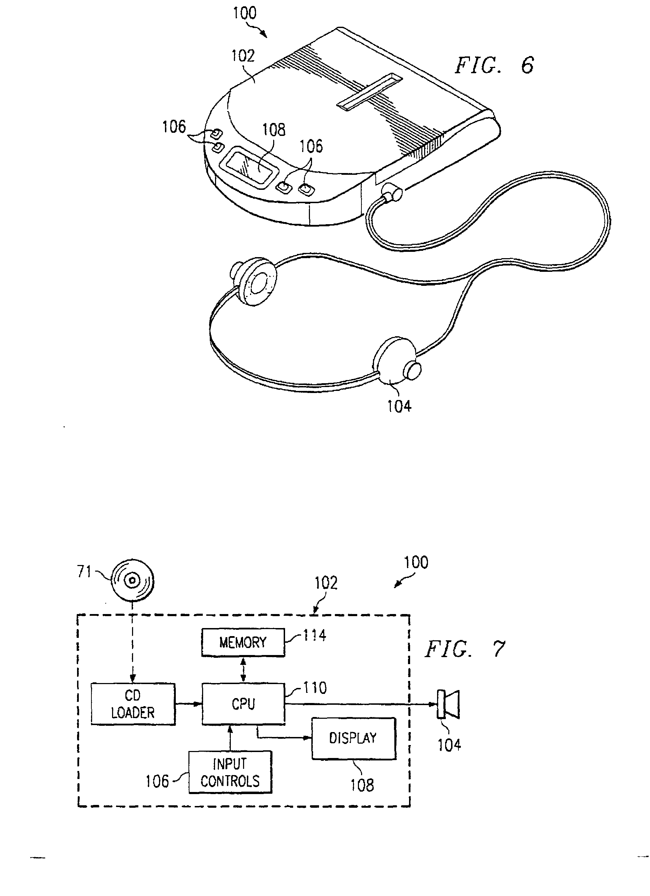

The correspondence between the proxy values and the file names preferably is according to an algorithm that assigns a proxy value to each file name in a predetermined manner. Many different embodiments of such an algorithm are possible. Without limitation, the following described algorithm is presented as one such possible algorithm. Referring to Figure 5, an exemplary directory structure is shown representing a plurality of audio files, F11-F22. The exemplary embodiment shown includes three directories―one root directory and two sub-directories, DIR1 and DIR2. The higher level file system includes information regarding the location of the sub-directories and the files for the entire disc. The audio files are F11 and F12, which are contained within directory DIR1, and F21 and F22, which are contained within directory DIR2.

In accordance with the embodiment in which proxy values are included in the metadata presort file 86, each proxy value is assigned by the CPU 72 scanning through the files in the directory structure in a predetermined manner and assigning sequential proxy values. One suitable scanning technique includes scanning the files F11-F22 in alphabetical order by directory and file name and assigning sequential proxy values in that order. In this way, a proxy value of "1" can be assigned to file F11, "2" to file F12, "3" to file F21, "4" to file F22, and so on. For the purpose of assigning proxy values, the directories and files within the directories can be scanned in alphabetical order, reverse alphabetical order, or in other desired order. Any other technique for assigning proxy values to audio files is part of this disclosure as well.

Once the metadata presort file is created and stored on the CD 71 (Figure 2), the CD is ready to be played on a player, such as that shown in Figure 6. As shown, the exemplary embodiment of a player system 100 comprises a disk drive and control mechanism 102 coupled to a speaker unit 104, which preferably comprises a pair of headphones. A block diagram of the player system 100 is shown in Figure 7. The disk drive and control mechanism 102 includes a CPU 110, memory 114, and a CD loader 118, as well as input controls and 106 and display 108 (also shown in Figure 6). The CPU 110 couples to the memory 114, CD loader 118, input controls 106, display 108 and via audio drive circuitry such as an amplifier (not shown) to speaker 104. The CD loader 118 functions to position the laser beam in the correct place on the CD 71 to read the compressed audio data files, metadata presort file and file system information from the CD and transfer the data to the CPU 110. The CPU 110 may store some or all of this data in memory 114 and then read the audio data from the memory, decompress the audio data and generate and provide suitable analog audio signals to the speaker 104. The CPU 110 also provides status and other information on the display 108 and receives input control signals from the input controls 106. The status information may include an identification of the music being played, length of the track, operational mode (e.g., play, pause, etc.), and other desired information. The CPU 110 responds to control signals from the input controls 106 and causes the CD loader 118 to retrieve the user-desired audio files from the CD 71.

To use the system 100, a user opens the disk drive and control mechanism 102 in accordance with conventional techniques and places a CD containing audio files, the metadata presort file. and file system information therein. Using controls 106 and display 108, the user can select a specific file to play or, as discussed below, select a presorted arrangement of files to play.

Referring still to Figure 7, in accordance with a preferred embodiment of the invention, the user can use input controls 106 to cause the CPU 110 transmit the listing of the various sorting criteria 94 from the vector sort table 88 (Figure 4) to the display 108. Once displayed, via controls 106, the user can select one of the sorting criterion and the audio files will be played in the order corresponding to the selected sorting criterion. If the selected sorting criterion 94 includes file names, then the player's CPU 110 simply plays the files in the order specified using the file names.

If, however, the selected sorting criterion 94 includes a proxy value instead of a file name, the CPU 110 preferably converts or matches the proxy value to a corresponding file name by applying the same algorithm described above used by system 62 to generate the proxy values in the first place. The CPU 110 retrieves the file system information from the CD 71, decodes and decompresses the file system information if necessary, and stores the file system information in the player's memory 114 for subsequent use in playing the CD. The file system information, which contains the file names, contains, or permits the CPU 71 to recreate, the directory and file information used by system 62 (Figure 3) to assign the proxy values as explained previously. By using the same algorithm as was used by system 62 to create the proxy values, the player 100 can accurately match the proxy values to the files. This process of converting or matching proxy values to files can be done during an initialization process as the CD 71 is inserted into the player 100 or at other suitable times.

The proxy value-to-file name matching algorithm can be predetermined and remain static in electronic system 60 and player 100. Alternatively, the algorithm, or data indicative of the algorithm, can be stored by system 60 on the CD itself. Accordingly, the player's CPU 110 can use information on the CD 71 to determine the algorithm to use to convert or match the proxy values to file names. This permits the electronic system 62 to use any one of a variety of algorithms and convey enough information to the player for the player to use the correct method of converting or matching proxy values to file names. Further, a plurality of proxy value-to-file name matching algorithms can be stored in the player and the CD 71 may contain a value or instruction for the player as to which algorithm should the player should use to perform the conversion.

Using the metadata presort file 86, the CD player 100 need not itself sort the files contained on the CD. Instead, the CD contains a data set (i.e., the presort file 86) which informs the CD player 100 as to how to order the audio files according to various sorting criteria. Thus, the player 100 described herein permits the user to play songs and display detailed song information in various orders without including logic or a large amount of memory to actually sort the audio files according to the user's preferences and store all of the pertinent metadata.

The scope of this disclosure is not limited to the CD context. In general, the audio files and metadata presort file can be stored on any type of storage medium. For example, many portable MP3 players include solid state memory for storing compressed audio files. This type of memory can be used for storing the metadata presort file. In addition, the present disclosure is not limited to portable CD players. The metadata presort file may be stored on a non-portable CD player or a computer system to permit such equipment to play audio files therefrom in an order selected by a user. Further, the disclosure is directed to any type of media data, not just audio. Examples of other types of media data include video, graphics, text, video combined with audio, etc. That being the case, the player 100 generally comprises a media player in its broadest sense.

The above discussion is meant to be illustrative of the principles and various embodiments of the present invention. Numerous variations and modifications will become apparent to those skilled in the art once the above disclosure is fully appreciated. It is intended that the following claims be interpreted to embrace all such variations and modifications.

## Claims

1. An electronic system, comprising:
a CPU; and
a mass storage device coupled to said CPU on which media files can be stored, each media file containing media data and metadata providing information about the media data;
wherein said CPU creates uses the metadata in said media files to create a metadata presort file stored on said mass storage device, said metadata presort file includes a plurality of presort segments, each segment including metadata and at least some of the media files arranged in a presorted order.

2. The system of claim 1 wherein said metadata presort file includes a vector sort table, said vector sort table includes a list of sorting criteria.

3. The system of claim 1 or claim 2 wherein each presort segment comprises a plurality of entries, each entry is associated with a media file and the entries are arranged in an order according to a sorting criteria.

4. The electronic system of any preceding claim further including:
a display coupled to said CPU; and
wherein at least some of the metadata can be shown on said display.

5. The electronic system of any preceding claim wherein:
said mass storage device is a CD loader which operatively interacts with an audio CD containing said media files in the form of a plurality of audio files and said metadata; and
further comprising a speaker coupled to said CPU through which said audio data is played.

6. A method for playing digital media files, comprising:
(a) selecting one of a plurality of sorting criteria;
(b) matching the selected sorting criteria to a list of media files arranged in an order according to the sorting criteria; and
(c) playing the media files in said order.

7. The method of claim 6 wherein said list includes media file names and (c) includes playing the media files using said file names.

8. The method of claim 6 or claim 7 wherein said list includes proxy values associated with media file names and said (c) includes determining media file names from the proxy values.

9. The method of claim 8 wherein (c) includes using one of a plurality of predetermined and stored algorithms to determine the media file names from the proxy values.

10. The method of any of claims 6 to 9 further comprising:
(d) storing a plurality of audio files on a CD, each of said audio files containing metadata pertaining to the audio file;
(e) creating a presort file specifying a plurality of differing orderings for the audio files; and
(d) storing said presort file on said CD.
